# Europäisches Patentamt

# European Patent Office

# Office européen des brevets

(11) Veröffentlichungsnummer: **0 277 258**
**B1**

(12) **EUROPÄISCHE PATENTSCHRIFT**

(45) Veröffentlichungstag der Patentschrift:
29.08.90

(21) Anmeldenummer: 87101561.6

(22) Anmeldetag: 05.02.87

(51) Int. Cl.⁵: **B65G 17/24**, B65G 47/26

(54) Vorrichtung zum Transport und zum Aufstauen von Paletten.

(43) Veröffentlichungstag der Anmeldung:
10.08.88 Patentblatt 88/32

(45) Bekanntmachung des Hinweises auf die Patenterteilung:
29.08.90 Patentblatt 90/35

(84) Benannte Vertragsstaaten:
BE DE ES FR GB IT SE

(56) Entgegenhaltungen:
DE-A- 2 210 341
US-A- 3 197 020

(73) Patentinhaber: CARL SCHENCK AG,
Landwehrstrasse 55 Postfach 40 18,
D-6100 Darmstadt(DE)

(72) Erfinder: Kunstmann, Uwe, Dr., Taunusstrasse 79,
D-6101 Rossdorf 1(DE)

(74) Vertreter: Dallhammer, Herbert, Dipl.-Ing., CARL
SCHENCK AG Patentabteilung
Postfach 4018 Landwehrstrasse 55,
D-6100 Darmstadt(DE)

ACTORUM AG

## Beschreibung

Die Erfindung betrifft eine Vorrichtung zum Transport und zum Aufstauen von Paletten mit an einem Zugorgan auf einer Achse angeordneten Tragrollen mit dazwischen angeordneter Staurolle.

Durch die Offenbarung des deutschen Gebrauchsmusters 7 728 979 sind Staurollenketten bekannt geworden, die in der Regel in zwei Strängen parallel nebeneinander angeordnet sind, wobei auf den Buchsen der Rollenketten jeweils Tragrollen frei drehbar angeordnet sind. Die Bolzen der Rollenkette ragen beidseitig seitlich aus der Kette heraus und tragen Laufbuchsen, die auf entsprechend zueinander angeordneten Schienenflächen abrollen. Die Tragrollen ihrerseits liegen auf keiner Führungs- oder Tragfläche auf sondern sind frei drehbar aufgehängt. Die Ketten sind im allgemeinen endlos ausgebildet und werden über geeignete Antriebsmittel in Umlauf gesetzt. Derartige Staurollenketten unterliegen einem beachtlichen Verschleiß und es ist mit diesen kein gleichmäßiger und ruhiger Lauf erzielbar, insbesondere beim Anfahren oder Abbremsen derartiger Ketten treten Stöße auf, die bei einer verschlissenen Kette noch verstärkt zur Geltung kommen. Weiterhin wird bei derartigen Staurollenketten oder Tragkettenförderern beim Umlauf der Förderkette um das Antriebs- oder das Umlenkrad ein Polygoneffekt auftreten, der zum Verschleiß des Antriebs- oder Umlenkrades führt. Des weiteren haben derartige Rollenketten sowohl das Gewicht des transportierten Gegenstandes aufzunehmen, als auch die Zugkraft zu übernehmen. Hierdurch wird der Verschleiß derartiger Rollenketten erhöht.

Es wurde zwar versucht (vgl. GM 7 728 979) durch die Anordnung eines mit Fluid füllbaren und entleerbaren Schlauches im Horizontalbereich einer derartigen Rollenkette die Kette durch das transportierte Gewicht nicht zu beanspruchen, da dieses Gewicht über die Tragrollen auf die Laufflächen und den Schlauch übertragen werden, sondern diese lediglich zur Übertragung der Zugkräfte einzusetzen. Hierbei bleiben weiterhin die Verschleißerscheinungen im Umlenkbereich zwischen vorlaufendem und rücklaufendem Trum einer derartigen Rollenkette bestehen und es muß darüber hinaus eine Vorrichtung, die mit Fluid gefüllt und von Fluid entleert werden kann vorgesehen werden; darüber hinaus ist bei einer derartigen Rollenkette, die als Tragkettenförderer oder als Staurollenförderer benutzbar ist, und bei der im allgemeinen ein Paar derartiger Rollenförderer nebeneinander eine Rollbahn bilden, ein häufiges Schmieren der Kettenteile unumgänglich. Werden derartige Rollenketten durch Parallelanordnung zu Förderstrecken und Staurollenbahnen zusammengestellt, so ist ein beachtlicher Aufwand im Hinblick auf den Gleichlauf zwischen den beiden parallel laufenden Ketten unvermeidlich. Auch ist zufolge des auftretenden Verschleisses ein Ausrichten der Trag- zu den Zugelementen nur unter zusätzlichem Verschleiß möglich.

Ausgehend hiervon liegt der Erfindung die Aufgabe zugrunde, bei derartigen Förderbahnen die zum Transport von Paletten und großflächigen Gegenständen eingesetzt sind, die Wartung und den Verschleiß wesentlich zu verringern, den Lärmpegel durch die Förderanlage zu verringern und gleichzeitig Anfahr- und Bremsstöße auf das zu fördernde Gut zu vermeiden bei einer sicheren Parallelführung eines derartigen Fördererpaares. Diese Aufgabe wird durch die kennzeichnenden Merkmale des Anspruchs 1 gelöst. Durch die elastische Führung der Trag- und Staurollen vom Zugorgan und deren elastische Zentrierung zum Zugorgan wird ein Geradeauslauf erreicht, so daß auch kein Verschleiß durch einen Schräglauf der Tragrolle oder der Staurolle zum Zugorgan auftreten kann. Durch die auf einen Fördergurt aufgebrachten Achshalter, die insbesondere mittels Verklebung auf der Fördergurtoberseite angeordnet sind und die Anordnung eines Rollenhalters, der Staurolle und Tragrollen trägt und der dem Achshalter nachläuft, wobei Seitenwandungen des Rollenhalters als Haltestreben für den Rollenhalter selbst mittels Bolzen mit dem Achshalter drehbeweglich verbunden sind, wird eine eindeutige Zentrierung der Tragrollen und der Staurollen zum Fördergurt zufolge Nachlaufs des Rollenhalters zum Achshalter erreicht, gleichzeitig dienen im rücklaufenden Trum der Stau- und/oder Förderstrecke die Tragrollen oder die Staurollen selbst als rollende Abstützung, wodurch eine beabsichtigte Verringerung der Reibung im rücklaufenden Trum des erfindungsgemäßen Fördergurts erreicht wird.

Insbesondere können beim Einfahren in Staurollenbahnen, bei denen oberhalb des Fördergurts Schienen für die Tragrollen angeordnet sind, Einfahrstöße zufolge Verkanten des Rollenhalters zum Fördergurt, wie es bei Rollenkettenförderern, insbesondere im ausgeschlagenen Zustand der Fall ist, nicht auftreten. Auch wird beim Förderbetrieb die Staurolle durch leichtes Andrücken auf dem Fördergurt arretiert und dient somit ohne Verschleiß als Tragrolle. Im Bereich einer Staustrecke des endlosen Fördergurts, in dessen Bereich die Tragrollen auf Schienen geführt sind, deren Abstand zum Fördergurt größer als der Radius der Staurolle ist, rollt die Staurolle hingegen am gestauten Bauteil, beispielsweise der Unterseite einer gestauten Palette oder eines großflächigen Bauteils ab. Bei dem Fördergurt selbst handelt es sich um einen mit Stahlseilen verstärkten endlosen Gummigurt oder um einen mit Glasfaserseilen verstärkten Gummi- oder Kunststoffgurt; auch können Textil- oder Polyamidgewebe als Verstärkungen eingesetzt werden.

Gemäß kennzeichnenden Merkmalen des Anspruchs 2 wird eine Fördereinrichtung unter Schutz gestellt, mit der die der Erfindung zugrundeliegende Aufgabe auch beim Reversierbetrieb des Förderorgans, also bei Umkehrung der Förderrichtung gelöst wird. Durch die Anordnung elastischer Seitenwandungen, die aus mit Kunststoff ummantelten federnden Stahlwangen bestehen kann, oder die aus elastischen mit Verstärkungen versehenen Kunststoffen bestehen kann, die jeweils mit den Achshaltern drehbeweglich verbunden sind, werden durch die konstruktive Ausbildung der Seitenwandungen, die sich in einem stumpfen Winkel im Bereich der Achse, der Tragrollen und der Staurolle treffen und die bevorzugt einstückig sind, die durch den Umlauf um Antriebs- oder Umlenkräder zufolge Längung des Fördergurts auftretenden Spannungen ohne Verschleiß metallischer Bauteile aneinander aufgenommen.

Mit den kennzeichnenden Merkmalen des Anspruchs 3 wird durch Anordnung von, die beiden Fördergurte verbindenden Stäbe ohne zusätzlichen mechanischen Aufwand eine Parallelführung der zu einer Stau- und/oder Förderstrecke paarweise angeordneten Fördergurte unter Schutz gestellt.

Die in Anspruch 4 unter Schutz gestellte Ausgestaltung des Erfindungsgegenstandes schlägt vor, am Rollenhalter Führungsklötze anzuordnen. Dies ist dann von besonderem Vorteil, wenn Staurollen und Tragrollen großer Breite mit einem schmalen Fördergurt verbunden sind und wenn die Tragrollen auf dem gesamten Umlauf auf Führungsschienen geführt sind, an deren Innenseite sich die Führungsklötze zentrieren können.

Die kennzeichnenden Merkmale des Anspruchs 5 zeigen eine noch weitere Ausgestaltung des Fördergurts mit Trag- und Staurollen, die insbesondere beim stoßfreien Übergang von Fördergut von einem Staurollenförderer auf einen Rollenförderer oder umgekehrt angewandt werden. Hierbei befindet sich der weiterführende Rollenförderer zwischen den parallelen Strängen der Stau- und/oder Fördereinrichtung, so daß bei gleichsinnigem Antrieb des Stauförderers und des nachgeordneten Förderers zufolge Wegtauchens der Staurolle ein stoßfreier Übergang der Palette oder des großflächigen Fördergutes auf den Rollenförderer durchgeführt wird. Anstelle eines gleichsinnigen Antriebs kann auch der weiterführende Förderer insgesamt eine Neigung besitzen, so daß das zu übergebende Fördergut durch eigene Schwerkraft weitertransportiert wird. Diese Anordnung kann auch im Reversierbetrieb eingesetzt werden, wenn von dem nachgeschalteten Förderer auf den Fördergurt, der als Stau- und/oder Förderstrecke ausgebildet ist, übergeben werden soll; hierbei sind die Trag- und Staurollen, insbesondere gemäß Anspruch 3 auf dem Fördergurt angeordnet.

Bei einer Ausgestaltung des endlosen Fördergurts gemäß Anspruch 6, besitzen die Fördergurte glatte Unterseiten. Hierdurch können, da im rücklaufenden Trum die Trag- oder Staurollen den Fördergurt abstützen, die nunmehr flachen Oberseiten der Fördergurte zum Transport von Fördergütern herangezogen werden. Dies ist insbesondere dann von Vorteil, wenn der Höhenunterschied zwischen vorlaufendem und rücklaufendem Trum so groß ist, daß Zwischenböden eingezogen werden können, auf denen Bedienungspersonal oder Roboter, die auf dem vorlaufenden Trum des Stauförderers transportierten, auf Paletten gelagerten Bauteile bearbeiten. In diesem Fall kann das in einer anderen Ebene rücklaufende Trum als Fördergurt mit glatter Oberfläche benutzt werden.

In der nachfolgenden Beschreibung wird der Gegenstand der Erfindung anhand einer Zeichnung näher erläutert. Es zeigen in schematischer Darstellung:

Fig. 1 einen als Stauförderer im vorlaufenden Trum und als Stetigförderer im rücklaufenden Trum ausgebildeten Fördergurt,

Fig. 2a den Transport eines Fördergutes auf dem rücklaufenden Gurtband,

Fig. 2b den Übergang von einem als Stauförderer ausgebildeten Fördergurt auf einen Rollenförderer,

Fig. 2c den Transport von Fördergut auf einer vom Fördergurt arretierten Staurolle,

Fig. 2d die Verbindung zweier Fördergurte zu einer Förderstrecke,

Fig. 3a einen für Reversierbetrieb ausgebildeten Rollenhalter,

Fig. 3b in vergrößertem Maßstab einen Fördergurt mit Trag- und Staurolle und Fig. 3c einen Fördergurt im Bereich einer Staustrecke.

Gleiche Bauteile werden in den verschiedenen Figuren mit denselben Bezugszeichen bezeichnet.

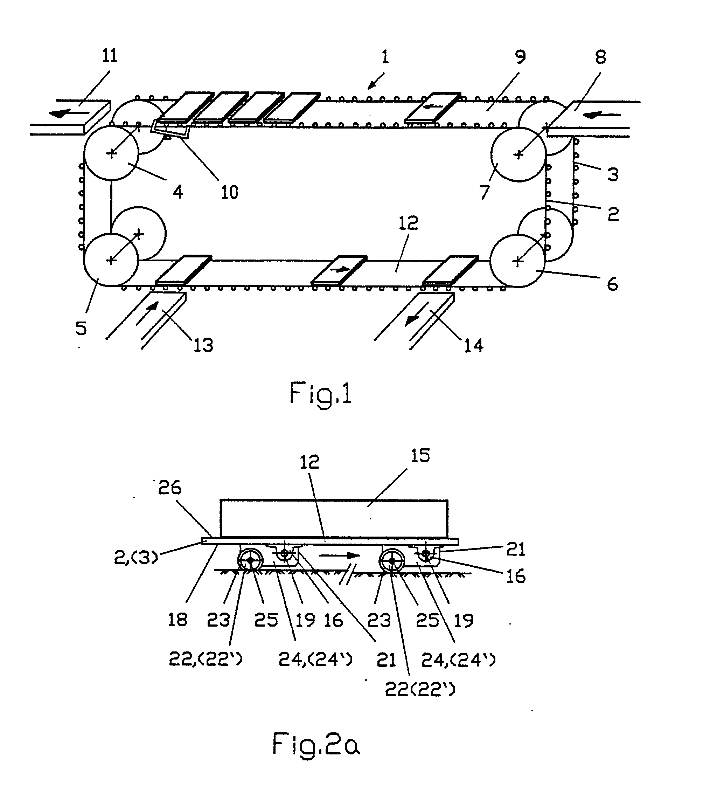

In Fig. 1 ist ein endloser Förderer 1 dargestellt, der aus zwei parallel zueinander angeordneten Fördergurten 2, 3 besteht. Die Fördergurte werden von einer Antriebsstation 4 angetrieben und über Umlenkungen 5, 6 und 7 umgelenkt.

Von einer Eingabestation 8, bei der es sich um einen Rollenförderer oder auch um ein Förderfahrzeug wie einen Hublader oder auch eine Ein-Schienen-Hängebahn handeln kann, werden die mit zu transportierenden und zu stauenden Bauteilen beladenen Paletten oder Behälter an das vorlaufende Trum 9 des endlosen Förderers 1 übergeben. Am Ende des vorlaufenden Trums 9 ist eine Vereinzelungsvorrichtung 10 vorgesehen, bei der entsprechend Information von einem Ausgabeförderer 11 die aufgestauten Transportteile abgenommen werden. Bei dem Ausgabeförderer 11 kann es sich ebenfalls um Förderer, wie bereits zur Eingabestation 8 genannt, handeln.

Zwischen der Antriebsstation 4 und der Umlenkung 5 wird der endlose Förderer beispielsweise vertikal und über ein Stockwerk geführt und im darunter liegenden Stockwerk wird das rücklaufende Trum 12 des endlosen Förderers 1 als Stetigförderer für dort über Eingaben 13 ankommendes Gut und über Ausgaben 14 abzugebendes Gut genutzt. Die Ausgestaltung der Fördergurte 2 und 3 ist den weiteren Figuren zu entnehmen.

So wird gemäß Fig. 2a auf den rücklaufenden Trumen 12 der Fördergurte 2, 3 eine Fördereinheit 15 transportiert.

Hierzu sind die Fördergurte 2 (3) mit gummielastischen Achshaltern 16 versehen, die auf ihrer Oberseite 18 befestigt sind. Die Befestigung der gummielastischen Achshalter 16 auf der Oberfläche 18 des Fördergurts 2 (3) kann mittels Kleben oder Vulkanisieren erfolgen. Die gummielastischen Achshalter 16 sind mit Bolzen 19 seitlich mit Rollenhaltern 21 verbunden, die ihrerseits ein Tragrollenpaar 22, 22' mit einer zwischen den Tragrollen 22 (22') angeordneten Staurolle 23 tragen. Der Rollenhalter 21 ist mittels Seitenwandungen 24 (24') über die Bolzen 19 mit dem Achshalter 16 verbunden, so daß die Rollenhalter 21 drehbeweglich mit dem Achshalter 16 verbunden sind. Von den Rollenhaltern 21 sind der Übersicht halber die vorderen Seitenwandungen 24' nicht dargestellt, so daß lediglich die rückwärtigen Seitenwandungen 24 sichtbar sind. Bevorzugt sind die Tragrollen links und rechts der Seitenwandungen 24 bzw. 24' angeordnet, während die Staurolle 23 zwischen den Seitenwandungen 24 bzw. 24' angeordnet ist. Die Tragrollen 22, 22' und die Staurolle 23 sind auf einer Welle 25 angeordnet.

Wie der Fig. 2a weiter zu entnehmen, läuft der Rollenhalter 21 mit seinen Seitenwandungen und seinen Tragrollen und der Staurolle jeweils den Achshaltern 16 nach. Zufolge dieser Anordnung ist ein elastisches Führen der Trag- und Staurollen vom Zugorgan gewährleistet und auch ein elastisches Zentrieren zum Zugorgan möglich.

Wie weiterhin der Fig. 2a entnehmbar, wird der Fördergurt 2 (3) rollbar über eine Unterlage über die Staurollen 23 oder die Tragrollen 22, 22' abgetragen und trägt als Stetigförderer auf seiner Unterseite 26 Fördereinheiten 15. Im Fall des rollenden Abtragens über die Staurollen 23 kann es sich um den Flur, über den der Fördergurt 2, 3 läuft, handeln, im Falle des Abtragens über die Tragrollen 22', 23' können U-Schienen im Flur eingelassen sein, über die die Fördergurte 2, 3 zum vorlaufenden Trum 9 zurückgeführt werden.

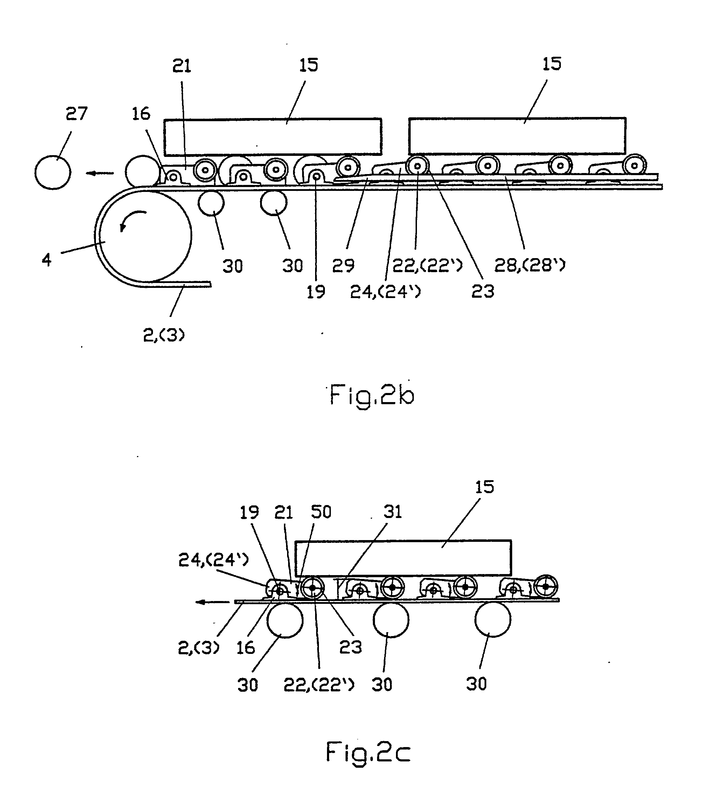

Bei der in Fig. 2b dargestellten Übergabestation zwischen einem Fördergurt 2 (3) und einem weiterführenden Förderer 27, der im Ausführungsbeispiel schematisch als Rollenförderer dargestellt ist, werden die Fördereinheiten 15 zunächst von den Staurollen 23 getragen, während dem sich die Tragrollen 22, 22' auf Laufschienen 28, 28' abstützen, die parallel zum Fördergurt 2, 3 jedoch in einer gewissen Höhe über diesem angeordnet sind. Zufolge der Drehbeweglichkeit der Rollenhalter 21 mit ihren Seitenwandungen 24, 24' um die Bolzen 19 werden die Fördereinheiten 15 in einer Höhe über dem Fördergurt 2, 3 transportiert, die im wesentlichen der Höhe der Rollen im weiterführenden Förderer 27 entspricht. Im Bereich der Übergabe zwischen Fördergurt und weiterführendem Förderer 27 sind die Laufschienen 28, 28' verjüngt 29 oder geneigt ausgebildet. Damit ist zum einen die Gewähr des stoßfreien Übergangs der Fördereinheiten auf einen weiterführenden Förderer 27 gegeben und zum anderen die elastische Führung der Trag- und Staurollen sowie deren Zentrierung durch das Zugorgan gewährleistet. Der Fördergurt 2, 3 selbst wird über Stützrollen 30 in seinem vorlaufenden Trum abgetragen und über die Antriebsstation 4 als rücklaufendes Trum zurückgeführt. Der Übersichtlichkeit halber wurden im Bereich der Antriebsstation und des rücklaufenden Trums keine Achshalter 16 und Rollenhalter 21 dargestellt.

Eine noch weitere Ausgestaltung des Erfindungsgegenstandes wird in Fig. 2c dargestellt. Der Fördergurt 2, 3 läuft über Stützrollen 30 in Richtung des Pfeils und trägt die über Achshalter in Rollenhaltern 21 geführten Tragrollen 22, 22' und die Staurollen 23. Über die Seitenwandungen 24, 24' sind die Rollenhalter 21 drehbeweglich mit den Bolzen 19, wie durch Doppelpfeile 50 dargestellt, verbunden. Wird nunmehr eine Fördereinheit 15 über eine Eingabestation 8 (vgl. Fig. 1) dem Fördergurt 2, 3 zugeführt, so stützt sich diese auf den Staurollen 23 ab. Zufolge Ausgestaltung der Staurolle 23 in ihrem Durchmesser, der gering größer als die Höhe 31 der Seitenwandungen 24, 24' ist, wird die Staurolle 23 selbst auf die Oberseite des Fördergurts 2, 3 geringfügig aufgepreßt, so daß eine Rotation dieser nicht stattfinden kann. Ist in der Förderstrecke eine Staustrecke vorgesehen, so werden nicht dargestellte Schienen oberhalb des Fördergurts 2, 3 angeordnet, auf die die Tragrollen 22, 22' auflaufen. Durch die Drehbeweglichkeit um den Bolzen 19 wird der Rollenhalter angehoben, die Staurolle kommt frei von der Oberseite des Fördergurts 2, 3 und unter Festhalten der Fördereinheit 15 wird der Fördergurt 2, 3 durch Abrollen der Staurollen 23 an der Unterseite der Fördereinheit 15 weiter transportiert.

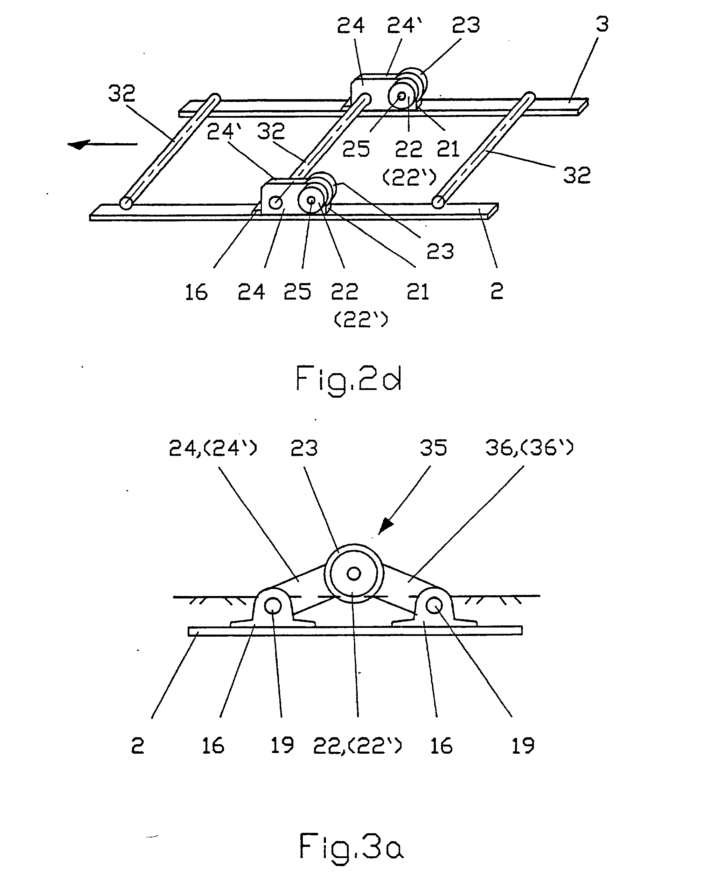

In Fig. 2d wird eine erfindungsgemäße Verbindung zweier Fördergurte 2, 3 mittels Stäben 32, die gleichzeitig als Ersatz für die Bolzen die Achshalter 16 mit den Seitenwandungen 24, 24' der beiden Rollenhalter 21 verbinden, dargestellt. Hierbei sind die Tragrollen 22, 22' ausserhalb der Seitenwandungen 24, 24' angeordnet, während die Staurollen 23 innerhalb der Seitenwandungen 24, 24' angeordnet sind und die Tragrollen und Staurollen über eine Welle 25 verbunden sind. Durch die Vielzahl der Stäbe 32, die jedes Paar von Achshaltern 16 und jedes Paar von Rollenhaltern einschließlich Seitenwandungen verbinden, wird eine praktisch starre Kupplung zwischen Fördergurt 2 und Fördergurt 3 hergestellt, so daß keine aufwendigen Gerad- und Gleichlaufführungen für die beiden Fördergurte eingesetzt werden müssen.

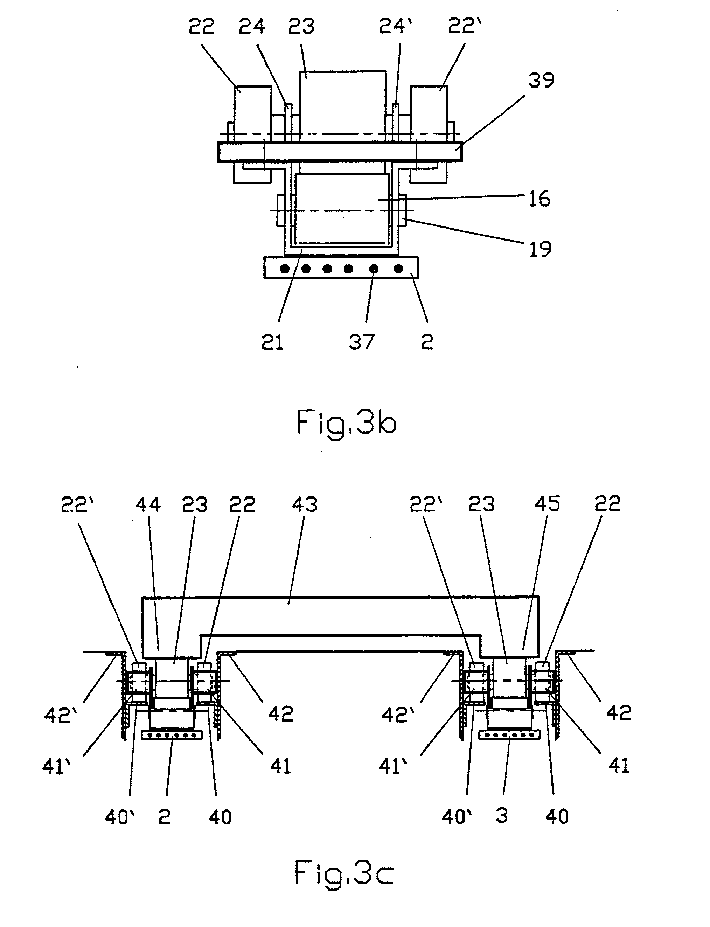

Der in Fig. 3a auf einem Fördergurt 2 dargestellte Rollenhalter 35 ist mittels zweier Bolzen 19 zwischen zwei Achshaltern 16 über seine Seitenwandungen 24, 24' einerseits und über Seitenwandungsverlängerungen 36, 36' andererseits mit den anderen Achshaltern 16 verbunden. Die Seitenwandungen 24, 24' und die Seitenwandungsverlängerungen 36, 36' sind einstückig aus elastischem Material hergestellt, so daß bei Umlenkungen des Fördergurts 2 um Antriebseinheiten 4 oder Umlenkeinheiten 5, die auftretende Längung des Fördergurtstücke zwischen den beiden Achshaltern zufolge der elastischen Verformung der Seitenwandungen und der Seitenwandungsverlängerungen aufgenommen werden kann, ohne daß die Staurolle 23 oder die Tragrollen 22, 22' an der Oberfläche des Fördergurts 2 schleifen. Das Freilaufen der Rollen geschieht durch eine stumpfwinklige Anordnung der Seitenwandung und der Seitenwandungsverlängerung zueinander.

Die in Fig. 3b vergrößerte Darstellung zeigt einen Fördergurt 2, der mit Stahlseilen 37 verstärkt ist und auf dem der Achshalter 16 von den Seitenwandungen 24, 24' des Rollenhalters 21 eingeschlossen wird. Am Rollenhalter 21 sind auch Führungsklötze 39 vorgesehen, die im Falle des Ausführungsbeispiels nach Fig. 3b gleichzeitig die Führung eines schmalen Fördergurts 2 im Bereich einer Schienenführung für die Tragrollen übernehmen.

Die in Fig. 3c dargestellten Fördergurte 2, 3 zeigen eine Phase des Transports, bei dem die Tragrollen 22, 22' auf Schienen 40, 40' laufen und somit die Last der Fördereinheit, die von der Staurolle 23 getragen wird, aufnehmen, so daß die Fördergurte 2, 3 lediglich den elastischen Zug aufbringen müssen. In diesem Fall sind einzelne Führungsklötze 41, 41' vorgesehen, die sich an Seitenteilen 42, 42' der Schienen 40, 40' zentrieren.

Wie in dieser Figur weiter dargestellt, werden die Fördergurte 2, 3 mit ihren Aufbauten von Seitenteilen 42, 42' überragt. Hiermit laufen die Fördergurte 2, 3 selbst in einem Kanal, der tiefer liegt als die normale Flurfläche ist. Zum einen wird hierdurch ein Schutz der Fördergurte 2, 3 erreicht und zum anderen können U-förmige Paletten 43, die mit ihren kurzen Schenkeln 44, 45 auf den Staurollen aufstehen nahe über Flur transportiert werden, ohne daß die Gefahr besteht, bei einem Zusammenstoß mit Gegenständen oder Personen Verletzungen hervorzurufen, da zufolge der Staurollen das geförderte Gut sofort stehenbleibt.

**Patentansprüche**

1. Vorrichtung zum Transport und zum Aufstauen von Paletten mit an einem Zugorgan auf einer Achse angeordneten Tragrollen mit dazwischen angeordneter Staurolle, dadurch gekennzeichnet, daß ein Fördergurt (2, 3) auf einer Oberseite (18) gummielastische Achshalter (16) trägt, deren Durchgangsbohrungen quer zur Förderrichtung verlaufen, daß die auf einer Welle (25) angeordneten Tragrollen (22, 22') mit dazwischen angeordneter Staurolle (23) auf je einem Rollenhalter (21) angeordnet sind, der sich in Förderrichtung hinter dem jeweiligen Achshalter (16) befindet, daß im Bereich des jeweiligen Achshalters (16) der Rollenhalter (21) in seinen Seitenwandungen (24, 24') Bohrungen besitzt, und daß ein Bolzen (19) die Bohrungen und die Durchgangsbohrung durchdringt, daß die Rollenhalter (21) über die Bolzen (19) mit dem Achshalter (16) drehbeweglich verbunden sind, so daß im rücklaufenden Trum (12) der Stau- und Förderstrecke die endlosen Fördergurte (2, 3) auf den Tragrollen (22, 22') oder den Staurollen (23) abgestützt zurücklaufen und daß die Staurolle (23) einen Durchmesser besitzt, der geringfügig größer als die Höhe der Seitenwandungen (24, 24') der Rollenhalter (21) ist.

2. Vorrichtung nach Anspruch 2, dadurch gekennzeichnet, daß die Seitenwandungen (24, 24') des Rollenhalters (21) eine rückwärtige elastische Verlängerung (36, 36') besitzen, daß diese Verlängerungen Bohrungen tragen, die mit auf dem Fördergurt (2, 3) angeordneten zusätzlichen Achshaltern (16) über Bolzen (19) drehbeweglich verbunden sind und daß die Seitenwandungen (24, 24', 36, 36') des jeweiligen Rollenhalters (21) einen stumpfen Winkel einschließen.

3. Vorrichtung nach Anspruch 2 oder 3, dadurch gekennzeichnet, daß zwei im Abstand nebeneinander angeordnete, als Stau- und Förderstrecke (1) ausgebildete endlose Fördergurte (2, 3) über die auf jedem Fördergurt vorhandenen Achshalter (16) mittels Stäben (32) verbunden sind und daß die Stäbe (32) gleichzeitig die Seitenwandungen (24, 24' bzw. 36, 36') der Rollenhalter (21) mit den Achshaltern (16) drehbeweglich verbinden.

4. Vorrichtung nach einem der vorhergehenden Ansprüche, dadurch gekennzeichnet, daß am Rollenhalter (21) oder seinen Seitenwandungen (24, 24' bzw. 36, 36') Führungsklötze (39 bzw. 41, 41') angeordnet sind.

5. Vorrichtung nach einem der Ansprüche 2 bis 5, dadurch gekennzeichnet, daß oberhalb der Fördergurtbahn (30) eine Laufschiene (28, 28') im Bereich eines Übergangs auf einen weiteren Förderer (27) angeordnet ist, auf der die Tragrollen (22, 22') abrollen, daß dessen Rollenoberkanten mit den Oberkanten der Staurollen (23) fluchten und daß die Laufschiene (28, 28') in den Bereich des weiteren Förderers sich verjüngend (29) verlängert ist.

6. Vorrichtung nach einem oder mehreren der vorhergehenden Ansprüche, dadurch gekennzeichnet, daß die Fördergurte (2, 3) glatte Unterseiten (26) besitzen, so daß im rücklaufenden Trum die Trag- (22,22') oder Staurollen (23) den Fördergurt abstützen zum Transport der Fördergüter auf diesen glatten Unterseiten aufliegend.

**Revendications**

1. Dispositif de transport et d'accumulation de palettes, comportant des galets supports disposés sur un axe d'un organe de traction, avec un galet d'accumulation en position intermédiaire, caractérisé en ce qu'une courroie de transport (2, 3) porte sur une face supérieure (18) des supports d'axe (16) en caoutchouc élastique, dont les alésages traversants s'étendent transversalement à la direction de transport, en ce que les galets support (22, 22') disposés sur un arbre (25) sont montés chacun, avec un galet d'accumulation (23) intermédiaire, sur un support de galet (21) qui se trouve derrière le support d'axe (16) respectif, dans le sens du déplacement, en ce que, dans la zone de chaque support d'axe (16), le support de galet (21) comporte des alésages dans ses parois latérales (24, 24'), et en ce qu'un boulon (19) traverse les alésages et l'alésage traversant, en ce que les supports de galet (21) sont reliés à rotation au support d'axe (16), par l'intermédiaire des boulons (19), de façon que, dans le compartiment de retour (12) du tronçon d'accumulation et de transfert, les courroies sans fin de transport (2, 3) reviennent en s'appuyant sur les galets support (22, 22') ou sur les galets d'accumulation (23), et en ce que le galet d'accumulation (23) présente un diamètre qui est légèrement supérieur à la hauteur des parois latérales (24, 24') des supports de galet (21).

2. Dispositif selon la revendication 1, caractérisé en ce que les parois latérales (24, 24') du support de galet (21) présentent un prolongement arrière (36, 36') élastique, en ce que ces prolongement portent des alésages qui sont reliés à rotation, par l'intermédiaire de boulons (19) à des supports d'axe (16) supplémentaires disposés sur la courroie de transport (2, 3), et en ce que les parois élastiques (24, 24' 36, 36') du support de galet (21) respectif font un angle obtus.

3. Dispositif selon la revendication 1 ou 2, caractérisé en ce que deux courroies de transport (2, 3) sans fin, disposées l'une à côté de l'autre, en tant que tronçon d'accumulation et de transport (1) sont reliées au moyen de barres (32), par l'intermédiaire des supports d'axe (16) existant sur chaque courroie de transport (32), et en ce que les barres (32) relient simultanément à rotation les parois latérales (24, 24', respectivement 36, 36') des supports de galet (21) aux supports d'axe (16).

4. Dispositif selon l'une des revendications précédentes, caractérisé en ce que des blocs de dégage (39, respectivement 41, 41') sont disposés sur le support de galet (21) ou sur ses parois latérales (24, 24', respectivement 36, 36').

5. Dispositif selon l'une des revendications 1 à 4, caractérisé en ce qu'au-dessus de la piste (30) de la courroie de transport, il est disposé une glissière de passage (28, 28'), dans la zone d'un passage sur un transporteur (27) supplémentaire sur lequel roulent les galets support (22, 22'), en ce que ses bords supérieurs de galets sont alignés par rapport aux bords supérieurs des galets d'accumulation (23) et en ce que la glissière de passage (28, 28') est prolongée en se rétrécissant dans la zone du transporteur supplémentaire.

6. Dispositif selon une ou plusieurs des revendications précédentes, caractérisé en ce que les courroies de transport (2, 3) comportent des faces inférieures (26) lisses, de sorte que dans le compartiment de retour, les galets support (22, 22') ou les galets d'accumulation (23) soutiennent la courroie de transport en vue du transport des biens transportés en appuyant sur ces faces inférieures lisses.

**Claims**

1. An apparatus for conveying and queueing pallets, having supporting rollers mounted on an axle on a traction member with a queueing roller disposed in between them, characterised in that a conveyor belt (2, 3) carries, on one surface (18), rubbery axle holders (16), the through-holes in which extend transversely to the conveying direction, that the supporting rollers (22, 22') mounted on a shaft (25) with a queueing roller (23) disposed between them are disposed, in each case, on a roller holder (21) which is behind the relevant axle holder (16) in the conveying direction, that in the region of the relevant axle holder (16), the roller holder (21) has drill holes in its side walls (24, 24'), and that a bolt (19) passes through the drill holes and the through-hole, that the roller holders (21) are connected to axle holder (16) via the bolt (19) for rotational movement so that in the return run (12) of the collecting and conveying track, the endless conveyor belts (2, 3) run back supported on the supporting rollers (22, 22') or the queueing rollers (23), and that the queueing roller (23) has a diameter which is slightly larger than the height of the side walls (24, 24') of the roller holders (21).

2. An apparatus according to Claim 2, characterised in that the side walls (24, 24') of the roller holder (21) have a resilient extension (36, 36') towards the rear, that these extensions have drill holes which are connected to additional axle holders (16) disposed on the conveyor belt (2, 3), via bolts (19) for rotational movement, and that the side walls (24, 24', 36, 36') of each roller holder (21) form an obtuse angle.

3. An apparatus according to Claim 2 or 3, characterised in that two endless conveyor belts (2, 3) which are arranged side by side with spacing and are constructed in the form of a queueing and conveying track (1) are connected by means of bars (32) via the axle holders (16) present on each conveyor belt, and that, at the same time, the bars (32) connect the side walls (24, 24' and 36, 36' respectively) of the roller holders (21) to the axle holders (16) for rotational movement.

4. An apparatus according to any one of the preceding Claims, characterised in that guide blocks (39 or 41, 41') are disposed on the roller holder (21) or its side walls (24, 24' and 36, 36' respectively).

5. An apparatus according to any one of Claims 2 to 5, characterised in that disposed above the conveyor-belt path (30) in the region of a transition to a further conveyor (27) is a runway rail (28, 28') on which the supporting rollers (22, 22') roll, that the upper edges of these rollers are in alignment with the upper edges of the queueing rollers (23), and that the runway rail (28, 28') is extended in a taper (29) in the region of the further conveyor.

6. An apparatus according to any one or more of the preceding Claims, characterised in that the conveyor belts (2, 3) have smooth under sides (26) so that, in the return run, the supporting rollers (22, 22') or queueing rollers (23) support the conveyor belt to convey the goods to be conveyed resting on these smooth under sides.

Fig.1

Fig.2a

Fig.2b

Fig.2c

Fig.2d

Fig.3a

Fig.3b

Fig.3c